# EUROPÄISCHE PATENTSCHRIFT

(11) **EP 3 584 781 B1**
(45) Veröffentlichungstag und Bekanntmachung des Hinweises auf die Patenterteilung: **23.02.2022**
(21) Anmeldenummer: 19179862.8
(22) Anmeldetag: 13.06.2019
(51) Int. Cl.: G08G 5/00, G01C 21/20, G01C 23/00

(54) **VERFAHREN UND SYSTEM ZUM ERMITTELN EINES ZUSTANDS EINES UNBEMANNTEN FLUGGERÄTS**
METHOD AND SYSTEM FOR ESTIMATING A CONDITION OF AN UNMANNED AIRCRAFT
PROCÉDÉ ET SYSTÈME DE DÉTERMINATION D'UN ÉTAT D'UN AÉRONEF SANS PILOTE

(30) Priorität: 18.06.2018 DE 102018114503
(43) Veröffentlichungstag der Anmeldung: 25.12.2019
(73) Patentinhaber: Airbus Defence and Space GmbH, 82024 Taufkirchen (DE)
(72) Erfinder: Woolnough, Riqaq, 52223 Stolberg (DE)
(74) Vertreter: LKGLOBAL Lorenz & Kopf PartG mbB Patentanwälte

(56) Entgegenhaltungen:
- EP-A2- 2 138 921
- US-A1- 2012 150 426
- US-B1- 9 274 521
- US-B1- 9 405 005
- PAHSA A ET AL: "Integrating navigation & surveillance of Unmanned Air Vehicles into the civilian national airspaces by using ADS-B applications", INTEGRATED COMMUNICATIONS, NAVIGATION AND SURVEILANCE CONFERENCE (ICNS), 2011, IEEE, 10. Mai 2011 (2011-05-10), Seiten J7-1, XP031953197, DOI: 10.1109/ICNSURV.2011.5935334 ISBN: 978-1-4577-0593-9

## Beschreibung

### TECHNISCHES GEBIET

Die Erfindung betrifft ein Verfahren zum Ermitteln eines Zustands und insbesondere einer Position eines unbemannten Fluggeräts. Die Erfindung betrifft ferner ein unbemanntes Fluggerätesystem mit einem unbemannten Fluggerät, mindestens einer Bodenstation und mindestens einer externen Datenquelle.

### HINTERGRUND DER ERFINDUNG

Unbemannte Fluggeräte sind üblicherweise mit einer oder mehreren Bodenstationen verbunden. Ferngesteuerte Fluggeräte, die auch als "Remotely Piloted Aircraft (RPA)" bekannt sind, werden direkt von einer Bodenstation aus gesteuert. Über eine bidirektionale Datenverbindung werden Steuerbefehle von der betreffenden Bodenstation an das Fluggerät übermittelt, während das Fluggerät Informationen über diverse Parameter an die Bodenstation sendet. Diese Parameter können allgemeine Telemetriedaten, Systemzustände und anderes aufweisen. Diese Daten enthalten üblicherweise auch Positionsdaten des Fluggeräts, die an der betreffenden Bodenstation angezeigt werden können.

Im Falle einer Beeinträchtigung des Datenverkehrs zwischen dem Fluggerät und der betreffenden Bodenstation kann ein Kontakt zu einer Flugverkehrskontrollstelle hergestellt werden, um beispielsweise telefonisch eine aktuelle Position des Fluggerätes zu erfahren. Dies könnte allerdings relativ aufwendig sein. Zusätzlich hierzu kann bei entsprechend kleinem Flugbereich auch über ein mit der Bodenstation verbundenes Radarsystem eine aktuelle Position erfasst werden.

PAHSA A ET AL: "lntegrating navigation & surveillance of Unmanned Air Vehicles into the civilian national airspaces by using ADS-B applications", INTEGRATED COMMUNICATIONS, NAVIGATION AND SURVEILANCE CONFERENCE (ICNS), 2011, IEEE, 10. Mai 2011 (2011-05-10), Seiten J7-1, XP031953197, diskutiert die allgemeine Anwendung von ADS-B zur Flugüberwachung von UAV-Systemen und nennt allgemein Übertragungstechniken von integrierbaren ADS-B-Systemen.

### ZUSAMMENFASSUNG DER ERFINDUNG

Es ist eine Aufgabe der Erfindung, ein Verfahren und System zum Ermitteln eines Zustands und insbesondere einer Position eines unbemannten Fluggeräts zu ermitteln, welches robust gegenüber Einschränkungen eines Datenverkehrs oder anderer Beeinträchtigungen ist.

Die Aufgabe wird gelöst durch ein Verfahren mit den Merkmalen des unabhängigen Anspruchs 1 und durch ein Fluggeräte-System gemäss Anspruch 8.

Vorteilhafte Ausführungsformen und Weiterbildungen sind den Unteransprüchen und der nachfolgenden Beschreibung zu entnehmen.

Es wird ein Verfahren ausgeführt durch ein Fluggeräte-System zum Ermitteln eines Zustands eines unbemannten Fluggeräts vorgeschlagen, das Verfahren aufweisend die durch mindestens eine Bodenstation ausgeführten Schritte des wiederholten Schätzens einer aktuellen Position des Fluggeräts auf Basis mindestens einer vorbekannten Position und mindestens eines Flugparameters, sowie Ablegen der jeweiligen geschätzten aktuellen Position in einer Datenbank, des Empfangens von extern erfassten Zustandsdaten, die eine Position an einem Bestimmungszeitpunkt aufweisen, des Ermittelns der geschätzten Position des Fluggeräts zum Bestimmungszeitpunkt auf Basis der abgelegten Positionen in der Datenbank, des Vergleichens der geschätzten Position des Fluggeräts zum Bestimmungszeitpunkt und der erfassten Position zum Bestimmungszeitpunkt und Ermitteln einer Abweichung der geschätzten Position von der erfassten Position, und des Korrigierens von abgelegten Positionen in der Datenbank ausgehend von der Abweichung.

Ein Kernaspekt der Erfindung liegt folglich darin, wiederholt eine Schätzung der aktuellen Position des Fluggeräts vorzunehmen, geschätzte Positionen in einer Datenbank abzulegen und bei Kenntnis einer korrekten Position zu einem praktisch beliebigen Bestimmungszeitpunkt Schätzungen hieran anzupassen, die zeitlich der von extern übermittelten Position nachfolgen. Hierzu werden die vorangehend dargelegten Verfahrensschritte vorgeschlagen.

Das Schätzen einer aktuellen Position des Fluggeräts kann auf Basis zumindest einer vorbekannten Position mit fachüblichen flugmechanischen Gleichungssystemen durchgeführt werden. Diese können lineare und nicht-lineare Gleichungssysteme umfassen, welche neben für das Fluggerät bekannten Flugleistungen auch Wetterdaten einbeziehen können. Die einzelnen Schätzungen können in einem bestimmten zeitlichen Raster durchgeführt werden. Ausgehend von der vorbekannten Position wird anhand von Leistungsdaten wie Geschwindigkeit, Fluglage, Triebwerksschub und ähnlichem sowie unter Berücksichtigung von Wetterdaten geschätzt, welchen Weg das Fluggerät von der vorbekannten Position aus bis zu einem nachfolgenden Schätzungszeitpunkt zurückgelegt hat.

Desweiteren kann das Schätzen der aktuellen Position des Fluggeräts auch auf Basis einer in der betreffenden Bodenstation vorliegenden Kenntnis einer oder mehrerer Flugrouten vorgenommen werden. Es wird dabei davon ausgegangen, dass das Fluggerät eine geplante Flugroute beibehält, sofern nicht das Gegenteil bekannt ist. Es kann auf Basis der gewählten oder bestimmten Flugparameter abgeschätzt werden, auf welcher Position auf der betreffenden Flugroute sich das Fluggerät zu einem Schätzungszeitpunkt befindet.

Eine Berechnung bzw. Schätzung kann auch in Form einer Echtzeit-Simulation durchgeführt werden, bei der die Rechenschrittweite begrenzt sein kann und die insbesondere linear durchführbar ist. Es ist verständlich, dass der Schritt des Schätzens kein einmaliger Schritt ist, sondern in einem vorangehend genannten Raster regelmäßig, alternativ dazu aber auch in unregelmäßigen oder zufälligen Abschnitten, wiederholt werden könnte.

Das Ablegen der jeweiligen geschätzten aktuellen Position in der Datenbank weist das Speichern der geschätzten Position zu einem Schätzungszeitpunkt auf. Neben einer einfachen Positionsinformation können Geschwindigkeit, Fluglage, momentaner Schub, Klappenstellungen oder andere Zustandsparameter festgehalten werden. Hierdurch ergibt sich eine Matrix mit einer Vielzahl von geschätzten Positionen und optional zusätzlichen Zustandsdaten zu einer Reihe von Schätzungszeitpunkten.

Das Empfangen von extern erfassten Zustandsdaten, welche eine Position an einem Bestimmungszeitpunkt aufweisen, kann etwa das Empfangen eines Datensatzes einer Flugverkehrskontrollstelle aufweisen. Dies kann neben dem Empfang eines ADS-B-Datensatzes über eine Datenverbindung auch das manuelle Einpflegen eines telefonisch erhaltenen Datensatzes zu einer Position zu einem Bestimmungszeitpunkt aufweisen.

Die Positionsdaten könnten von dem Fluggerät selbst über ADS-B, ADS-C oder ACARS an eine Flugverkehrskontrollstelle übermittelt werden. Die Abkürzung ADS steht hierbei für "Automatic Dependent Surveillance" und bezeichnet Systeme zur automatischen Erfassung und Anzeige von Flugbewegungen in einem Luftraum. Fluggeräte, insbesondere Fluggeräte, die in einem zivilen Luftraum bewegt werden, senden Positionsdaten sowie andere spezifische Flugdaten kontinuierlich auf einer bestimmten Funkfrequenz aus. Üblicherweise werden diese Daten ungerichtet und in regelmäßigen Abständen ausgesandt. Diese Variante wird unter dem Begriff ADS-B zusammengefasst, wobei "B" für "Broadcast" steht. ADS-C beinhaltet den Versand von Zustandsdaten auf Anorderung, wobei "C" für "Contract" steht. Auch über "ACARS" ("Aircraft Communications, Addressing and Reporting System") könnten Positionsdaten kommuniziert werden. Alternativ dazu wären auch Daten einer Radarüberwachung denkbar, etwa eines Sekundärradars (SSR). ADS-B-Daten können über das Internet abgerufen werden. In Zukunft könnten ADS-B-Daten auch über ein satellitengestütztes System empfangbar sein. Sollten selbst diese Datenquellen nicht zur Verfügung stehen, könnten punktuell telefonisch ADS-B-Daten abgefragt und bei der Durchführung des Verfahrens verwendet werden.

Die Positionsdaten, welche manuell oder automatisiert bereitgestellt werden können, erlauben einen einfachen Vergleich einer durchgeführten Schätzung mit einem tatsächlichen Wert, der aus einer zertifizierten Datenquelle stammt. Ist eine Reihe von geschätzten Positionen zu mehreren Schätzungszeitpunkten bekannt, kann ein geeigneter Schätzungszeitpunkt oder ein Bereich von Schätzungszeitpunkten ausgewählt werden, der dem Bestimmungszeitpunkt weitgehend entspricht oder durch Annäherung bzw. Interpolation ermittelbar ist. Aus dem Vergleich ergibt sich ein Wert für eine Positionsabweichung zwischen der tatsächlichen und der geschätzten Position zu einem Bestimmungszeitpunkt. Dieser Wert wird zu der betreffenden geschätzten Position hinzugefügt und die Positionen bevorzugt sämtlicher zeitlich nachfolgender Schätzungszeitpunkte werden neu berechnet. Die durchgeführte Schätzung wird damit auf Basis realer Daten gestützt und angepasst. Ihre Genauigkeit erhöht sich dadurch.

In einer vorteilhaften Ausführungsform wird das Schätzen der aktuellen Position auf Basis einer vorherigen abgelegten Position in der Datenbank durchgeführt. Dies bedeutet, dass der zurückgelegte Weg zwischen zwei aufeinander folgenden Schätzungszeitpunkten auf Basis der vorangehend genannten Parameter ermittelt wird. Das daraus folgende Weginkrement wird an die vorherige abgelegte Position angeknüpft. Die wiederholte Schätzung einer Position des Fluggeräts ist folglich eine Kette von aufeinander folgenden Schätzungen. Wird nach Empfangen einer Position von einer externen Datenquelle ein Schätzwert in der Datenbank verändert, ändern sich alle nachfolgenden Schätzwerte dieser Kette.

In einer vorteilhaften Ausführungsform weist das Empfangen von extern erfassten Zustandsdaten das Empfangen mindestens eines für das Fluggerät relevanten Datensatzes einer Flugverkehrskontrollstelle auf. Die Flugverkehrskontrollstelle (auch "Air Traffic Control", ATC) kann auf verschiedenen Wegen Datensätze erhalten, die für das betreffende Fluggerät relevant sind. Die Flugsicherung bzw. Flugverkehrskontrollstelle kann diese Daten ungefiltert bereitstellen. Ein Datensatz kann folglich Daten einer größeren Anzahl von Fluggeräten aufweisen, wobei die Daten für das betreffende Fluggerät hiervon ebenfalls umfasst sind.

In einer bevorzugten Ausführungsform weist das Empfangen von extern erfassten Zustandsdaten daher auch das Ausfiltern von Positionsdaten aus einem empfangenen Datensatz auf. Ein Datensatz kann eine Vielzahl von Positionsdaten von einer großen Anzahl von Flugzeugen beinhalten. Basierend auf der eindeutigen Bezeichnung des Fluggeräts können aus diesem Datensatz durch Filtern die entsprechenden Positionsdaten extrahiert werden.

In einer bevorzugten Ausführungsform weist das Empfangen von extern erfassten Zustandsdaten das Empfangen von ADS-B-Daten auf.

Das Verfahren kann ferner das Anzeigen von Positionsdaten aus zuletzt von extern empfangenen Zustandsdaten an einer Bodenstation aufweisen. Einem Anwender kann hier beispielsweise in einem bestimmten Bildschirmabschnitt stets angezeigt werden, welche extern bekannte Flugposition verfügbar ist. Es ist vorstellbar, dass bei einer vorübergehenden Einschränkung einer Datenverbindung zwischen einer Bodenstation und dem betreffenden Fluggerät diese extern bekannten Positionsdaten optisch hervorgehoben werden, so dass der Anwender sofort Kenntnis darüber erlangt, dass eventuell eine - wenn auch geringe - Abweichung zu einer anderen Position bestehen könnte, die dem Anwender für die Steuerung angegeben wird.

Es ist zudem bevorzugt, die geschätzte Position an einer Bodenstation anzuzeigen.

Wie vorangehend dargelegt, könnte es hilfreich sein, bei Anzeige einer geschätzten Position diese optisch hervorzuheben, so dass dem Anwender unmittelbar auffällt, dass es sich bei dieser Positionsangabe um eine geschätzte Position handelt.

Die Erfindung betrifft ferner ein Fluggeräte-System, aufweisend ein Fluggerät, mindestens eine Bodenstation und mindestens eine Bereitstellungseinheit zum Bereitstellen von extern erfassten Zustandsdaten, wobei das System dazu ausgebildet ist, das vorangehend genannte Verfahren auszuführen. Die mindestens eine Bodenstation weist bevorzugt mindestens eine Verbindung zu einer externen Quelle für Zustandsdaten auf. Dies kann über die Bereitstellungseinheit realisiert sein, die etwa als ein Datenbankserver oder eine Empfangseinrichtung ausgeführt sein kann. Insbesondere die mindestens eine Bodenstation ist dazu eingerichtet, das vorangehend genannte Verfahren auszuführen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt ein schematisches Blockschaltbild eines erfindungsgemäßen Verfahrens.
Fig. 2 zeigt ein Fluggerätesystem in einer schematischen Ansicht.
Fig. 3 zeigt schematisch den Vorgang des Vergleichs einer extern ermittelten Position mit abgelegten Schätzwerten.

### DETAILLIERTE DARSTELLUNG EXEMPLARISCHER AUSFÜHRUNGSFORMEN

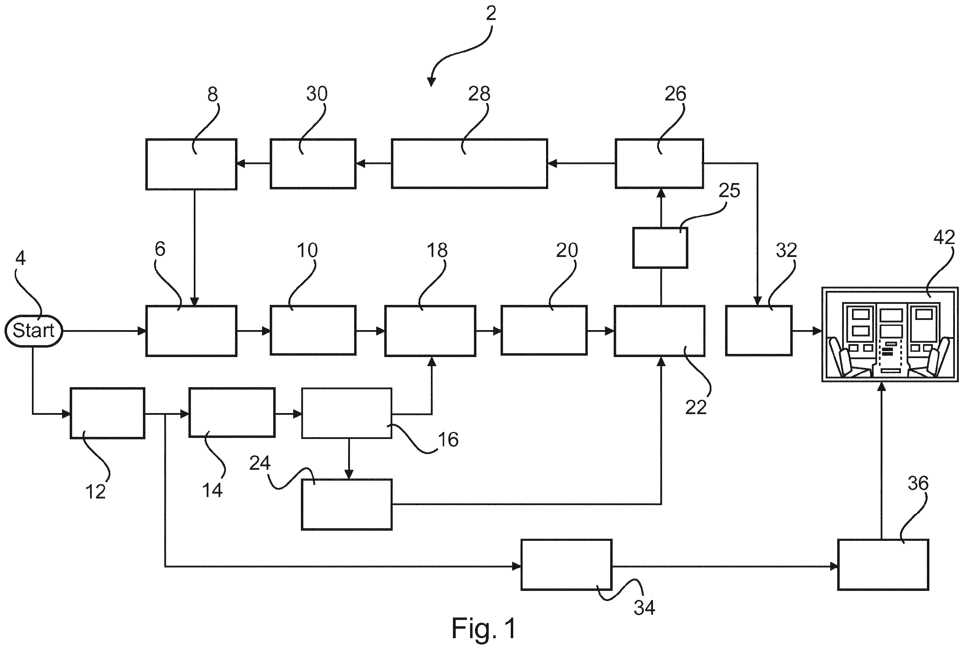

Fig. 1 zeigt eine schematische, blockbasierte Darstellung eines erfindungsgemäßen Verfahrens 2. Das Verfahren 2 kann mit einem (fiktiven) Startpunkt 4 beginnen. Es könnte vorstellbar sein, diesen Startpunkt 4 entweder direkt mit der Inbetriebnahme des betreffenden Fluggeräts vorzunehmen oder beim Erkennen einer Beeinträchtigung einer Datenverbindung. Da das Verfahren 2 jedoch bevorzugt kontinuierlich ausgeführt wird, symbolisiert dieser Start 4 lediglich einen Einstiegspunkt.

Das Verfahren 2 weist den Schritt des Schätzens 6 einer aktuellen Position des betreffenden Fluggeräts auf, wobei der Vorgang des Schätzens 6 in diesem Beispiel auf einer vorbekannten Position 8 sowie mindestens einem Flugparameter basiert. Die Positionsschätzung kann durch Anwendung der mechanischen Grundgleichungen auf das betreffende Fluggerät durchgeführt werden. Hierbei werden sämtliche auf das Fluggerät wirkende Kräfte in ein Gleichgewicht gesetzt und hieraus eine momentane, gerichtete Geschwindigkeit berechnet. Diese erlaubt, inkrementell einen zurückgelegten Weg und eine Flugrichtung zu bestimmen. Hieraus ergibt sich schließlich die geschätzte Position. Alternativ oder zusätzlich dazu kann hier auch der Fortschritt auf einer eingestellten Flugroute bzw. Flugbahn geschätzt werden.

Es ist verständlich, dass die Qualität der Schätzung von mehreren Faktoren abhängt. Zum Einen sollten zur erfolgreichen Schätzung die Flugleistungsparameter des betreffenden Fluggeräts hinreichend genau bekannt sein. Diese können durch theoretische und experimentelle Bestimmung ermittelt werden. Je nach Anforderung an die Genauigkeit können mehr oder weniger detaillierte flugmechanische Gleichungen aufgestellt werden, die zur Erhöhung der Präzision eine hinreichend hohe Anzahl an relevanten Parametern enthalten könnten. Sollte das Fluggerät einen auf Verbrennung eines Kraftstoffs basierenden Antrieb aufweisen, kann ein wichtiger Parameter etwa die Kenntnis eines momentanen Kraftstoffverbrauchs, der direkte Auswirkungen auf die Masse des Fluggeräts hat, sein. Zum Anderen sind wetterbedingte Parameter so genau zu bestimmen, dass insbesondere eine mittlere Windgeschwindigkeit in der momentanen Flughöhe bekannt ist und in der Schätzung berücksichtigt werden kann.

Eine geschätzte aktuelle Position wird sodann in einer Datenbank abgelegt 10. Hieraus ergibt sich eine Reihe von geschätzten Positionen an bestimmten Schätzungszeitpunkten.

Des Weiteren können extern erfasste Zustandsdaten, welche eine Position an einem Bestimmungszeitpunkt aufweisen, empfangen werden 12. Dies könnte insbesondere das Empfangen eines Datensatzes aus einem ADS-B-System umfassen. Ein solcher Datensatz kann je nach Reichweite eine Vielzahl von Positionsdaten und Kennungen von Fluggeräten beinhalten, aus denen die für das betreffende Fluggerät relevanten Positionsdaten extrahiert bzw. ausgefiltert werden 14. Da des Weiteren die empfangenen Positionsdaten nicht die tatsächliche momentane Position beinhalten, sondern aufgrund einer gewissen Latenz bereits etwas veraltete Positionsdaten aufweisen, wird zunächst ein Bestimmungszeitpunkt aus den Positionsdaten extrahiert 16. Hieraus kann ein passendes Zeitfenster in der Datenbank mit den geschätzten Positionsdaten ausgewählt werden 18, um anschließend die geschätzte Position zu dem Bestimmungszeitpunkt zu ermitteln 20.

Da die Schätzungen zwar wiederholt durchgeführt werden, jedoch nicht für beliebig kleine Zeitinkremente, ist zu erwarten, dass der Bestimmungszeitpunkt der extern erfassten Positionsdaten nicht exakt mit einem Schätzungszeitpunkt aus der Datenbank zusammenfällt. Vielmehr ist zu erwarten, dass der Bestimmungszeitpunkt zwischen zwei Schätzungszeitpunkten liegt. Allerdings kann auf Basis von zwei benachbarten geschätzten Positionen zu zwei benachbarten Schätzungszeitpunkten ein Zwischenwert zu dem Bestimmungszeitpunkt beispielsweise durch Interpolation berechnet werden. Dies wird mit dem Ermitteln 20 der geschätzten Position zu dem Bestimmungszeitpunkt durchgeführt.

Ein wesentlicher Aspekt des erfindungsgemäßen Verfahrens 2 liegt in dem Vergleich 22 der extern erfassten Position und der geschätzten Position an dem Bestimmungszeitpunkt, wobei die extern erfasste Position an dem Bestimmungszeitpunkt exemplarisch in einem Zwischenschritt 24 aus dem Datensatz extrahiert wird. Aus dem Vergleich 22 wird eine Abweichung zwischen der geschätzten und der tatsächlichen Position zum Bestimmungszeitpunkt ermittelt 25, der insbesondere in dem betreffenden Zeitfenster, das den Bestimmungszeitpunkt enthält, zur Korrektur 26 der geschätzten Position zum Bestimmungszeitpunkt genutzt wird.

Nach dieser Korrektur können sämtliche nachfolgenden geschätzten Positionen korrigiert werden 28, um anschließend wieder in der Datenbank abgelegt zu werden 30. Schließlich wird die letzte geschätzte Position verwendet, um mit der Schätzung 6 der aktuellen Position fortzufahren.

Die aktualisierte Position in der Datenbank kann zum Anzeigen an eine Bodenstation übertragen werden 32. Gleichermaßen können auch aus den extern erfassten Zustandsdaten Informationen zu Position und Bestimmungszeitpunkt des betreffenden Fluggeräts extrahiert werden 34, um ebenfalls an die Bodenstation übertragen zu werden 36.

Hieraus ergibt sich zusammenfassend ein besonders vorteilhaftes Verfahren zum Ermitteln einer aktuellen Position eines Fluggeräts auch bei einer beeinträchtigten Datenverbindung unter Zuhilfenahme von extern erfassten Zustandsdaten, insbesondere über ADS-B-Daten. Einem Anwender können aufgrund der stetigen Stützung und Aktualisierung der Schätzungsdaten sehr genaue Positionsinformationen angezeigt werden, die eine reine Schätzung von Positionsdaten deutlich übertreffen. An dieser Stelle sei angemerkt, dass das Empfangen von extern erfassten Zustandsdaten nicht zwangsläufig stets wiederholt und automatisiert durchgeführt werden muss. Es könnte sich sogar anbieten, bei fehlendem ADS-B-Zugang oder dergleichen telefonisch von einer Luftverkehrszentrale Positionsdaten zu bestimmten Zeitpunkten übermitteln zu lassen, mit denen die laufende Schätzung manuell gestützt werden kann.

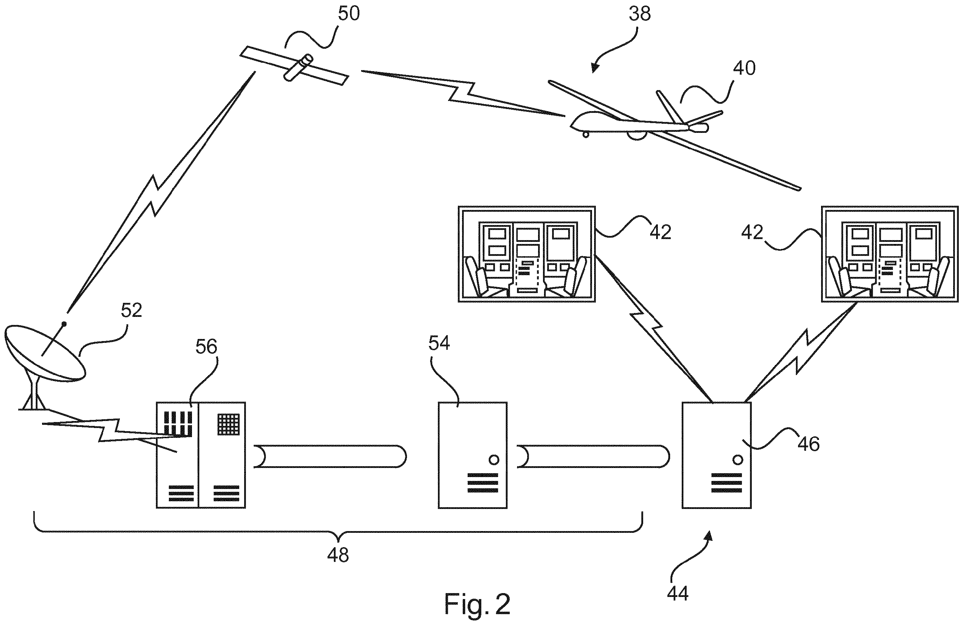

Fig. 2 zeigt ein erfindungsgemäßes System 38 mit einem Fluggerät 40, zwei Bodenstationen 42 und exemplarisch einer übergeordneten Zentrale 44, welche einen Datenbankserver 46 aufweist. Das System 38 ist in der Lage, das vorangehend erläuterte erfindungsgemäße Verfahren auszuführen. Empfangene Positionsdaten können in dem Datenbankserver 46 abgelegt und durch die Bodenstationen 42 abgerufen werden. Das in Fig. 1 gezeigte Verfahren des Schätzens kann in der jeweiligen Bodenstation 42 durchgeführt werden. Die geschätzten Positionsdaten können hierbei ebenso in der betreffenden Bodenstation 42 abgelegt und nach Erhalt extern bestimmter Positionsdaten korrigiert werden.

Als externe Quellen für erfasste Positionen können unter anderem satellitengestützte ADS-B-Systeme 48 eingesetzt werden, die einen oder mehrere Satelliten 50, eine Bodenantenne 52 sowie eine ADS-B-Daten bereitstellende Einheit 54 aufweisen können. Die durch die Einheit 54 bereitgestellten Daten könnten durch eine Verarbeitungseinheit 56 aufbereitet werden, die in der Lage ist, von der Bodenantenne 52 gelieferte Rohdaten in eine standardisiertes Format zu bringen.

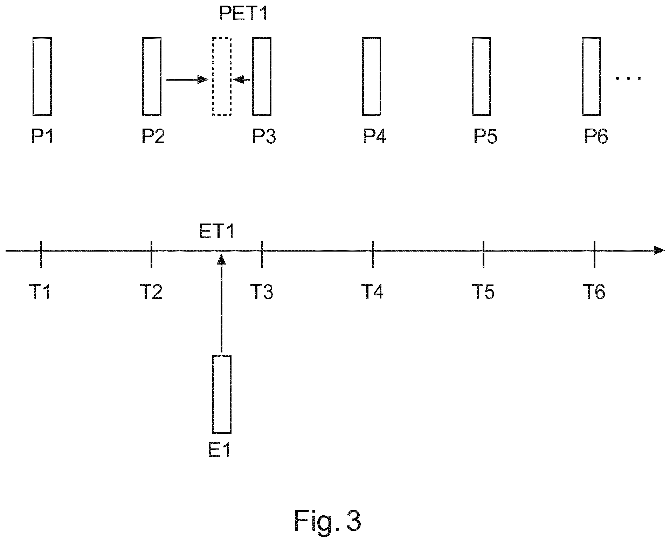

Fig. 3 zeigt den Vorgang des Vergleichens eines extern ermittelten Positionswerts E1 mit Schätzwerten, die beispielhaft als Menge P1 bis P6 dargestellt sind und zu Schätzungszeitpunkten T1 bis T6 ermittelt wurden. Der Positionswert E1 ist beispielhaft an einem Bestimmungszeitpunkt ET1 ermittelt worden. Dieser liegt hier zwischen zwei Schätzungszeitpunkten T2 und T3. Für den Vergleich des extern ermittelten Positionswerts E1 mit Schätzwerten können folglich die Zeitpunkte T2 und T3 sowie die zugehörigen Schätzwerte P2 und P3 aus der Datenbank gewählt werden, da an dem Bestimmungszeitpunkt ET1 genau kein Schätzwert vorliegt.

Für den Vergleich kann aus beiden Schätzwerten P2 und P3 beispielsweise durch Interpolation der Schätzwert PET1 an einem Schätzungszeitpunkt ermittelt werden, der dem Bestimmungszeitpunkt ET1 entspricht. Dieser Schätzwert PET1 kann schließlich mit dem extern ermittelten Positionswert E1 verglichen werden, um die Abweichung zu bestimmen. Alle dem entsprechenden Schätzwert PET1 nachfolgenden Schätzwerte P3, P4, etc. können anschließend entsprechend korrigiert bzw. neu berechnet werden.

Ergänzend sei darauf hingewiesen, dass "aufweisend" keine anderen Elemente oder Schritte ausschließt, und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren (2) ausgeführt durch ein Fluggeräte-System zum Ermitteln eines Zustands eines unbemannten Fluggeräts, aufweisend die durch mindestens eine Bodenstation (42) ausgeführten Schritte:
- wiederholtes Schätzen (6) einer aktuellen Position des Fluggeräts auf Basis mindestens einer vorbekannten Position (8) und mindestens eines Flugparameters, sowie Ablegen (10) der jeweiligen geschätzten aktuellen Position in einer Datenbank,
- Empfangen (12) von extern erfassten Zustandsdaten, die eine Position an einem Bestimmungszeitpunkt aufweisen,
- Ermitteln (20) einer Schätzung einer Position des Fluggeräts zum Bestimmungszeitpunkt auf Basis der abgelegten Positionen in der Datenbank,
- Vergleich (22) der geschätzten Position des Fluggeräts zum Bestimmungszeitpunkt und der erfassten Position zum Bestimmungszeitpunkt und Ermitteln (25) einer Abweichung der geschätzten Position von der erfassten Position, und
- Korrigieren (28) der abgelegten Positionen in der Datenbank, die nach dem Bestimmungszeitpunkt folgen, ausgehend von der Abweichung.

2. Verfahren (2) nach Anspruch 1,
wobei das Schätzen (6) der aktuellen Position aus Basis der vorherigen abgelegten Position in der Datenbank durchgeführt wird.

3. Verfahren (2) nach Anspruch 1 oder 2,
wobei das Empfangen (12) von extern erfassten Zustandsdaten das Empfangen mindestens eines für das Fluggerät relevanten Datensatzes einer Flugverkehrskontrollstelle aufweist.

4. Verfahren (2) nach Anspruch 3,
wobei das Empfangen von extern erfassten Zustandsdaten das Ausfiltern (14) der Positionsdaten des Fluggeräts aus dem Datensatz aufweist.

5. Verfahren (2) nach einem der vorhergehenden Ansprüche,
wobei das Empfangen von extern erfassten Zustandsdaten das Empfangen von ADS-B-Daten aufweist.

6. Verfahren (2) nach einem der vorhergehenden Ansprüche,
ferner aufweisend das Empfangen (32) von Positionsdaten aus zuletzt von extern empfangenen Zustandsdaten durch die Bodenstation zum Anzeigen auf einem Bildschirm.

7. Fluggeräte-System (38), aufweisend ein Fluggerät (40), mindestens eine Bodenstation (42), und mindestens eine Bereitstellungseinheit (54) zum Bereitstellen von extern erfassten Zustandsdaten, wobei das System (38) dazu ausgebildet ist, das Verfahren nach einem der Ansprüche 1 bis 6 auszuführen.

## Claims

1. Method (2) carried out by an aircraft system for ascertaining a state of an unmanned aircraft, comprising the steps carried out by at least one ground station (42):
- repeatedly estimating (6) a current position of the aircraft on the basis of at least one previously known position (8) and at least one flight parameter, and storing (10) the respective estimated current position in a database,
- receiving (12) externally acquired state data comprising a position at a determination time,
- ascertaining (20) an estimate of a position of the aircraft at the determination time on the basis of the stored positions in the database,
- comparing (22) the estimated position of the aircraft at the determination time and the acquired position at the determination time and ascertaining (25) a deviation of the estimated position from the acquired position, and
- correcting (28) the stored positions in the database that come after the determination time on the basis of the deviation.

2. Method (2) according to Claim 1,
wherein the estimating (6) of the current position is performed on the basis of the previous stored position in the database.

3. Method (2) according to Claim 1 or 2,
wherein the receiving (12) of externally acquired state data comprises receiving at least one dataset relevant to the aircraft from an air traffic control centre.

4. Method (2) according to Claim 3,
wherein the receiving of externally acquired state data comprises filtering out (14) the position data of the aircraft from the dataset.

5. Method (2) according to one of the preceding claims,
wherein the receiving of externally acquired state data comprises receiving ADS-B data.

6. Method (2) according to one of the preceding claims,
further comprising the ground station receiving (32), for the purpose of display on a screen, position data comprising state data that have been received externally most recently.

7. Aircraft system (38), comprising an aircraft (40), at least one ground station (42) and at least one providing unit (54) for providing externally acquired state data, wherein the system (38) is designed to carry out the method according to one of Claims 1 to 6.

## Revendications

1. Procédé (2), exécuté par un système d'aéronef, pour établir un état d'un aéronef sans pilote, présentant les étapes exécutées par au moins une station au sol (42) consistant à :
- estimer de manière répétée (6) une position actuelle de l'aéronef sur la base d'au moins une position (8) connue préalablement et d'au moins un paramètre de vol, ainsi que mémoriser (10) dans une base de données la position actuelle estimée respective,
- recevoir (12) des données d'accès détectées en externe et qui présentent une position à un instant de détermination,
- établir (20) une estimation d'une position de l'aéronef à l'instant de détermination sur la base des positions mémorisées dans la base de données,
- comparer (22) la position estimée de l'aéronef à l'instant de détermination et la position détectée à l'instant de détermination, et établir (25) un écart de la position estimée par rapport à la position détectée, et
- corriger (28) les positions mémorisées dans la base de données qui suivent après l'instant de détermination, à partir de l'écart.

2. Procédé (2) selon la revendication 1, dans lequel l'estimation (6) de la position actuelle est effectuée sur la base de la position mémorisée précédente dans la base de données.

3. Procédé (2) selon la revendication 1 ou 2, dans lequel la réception (12) de données d'état détectées en externe comporte la réception d'au moins un ensemble de données pertinent pour l'aéronef de la part d'un centre de contrôle de la circulation aérienne.

4. Procédé (2) selon la revendication 3, dans lequel la réception de données d'état détectées en externe comporte l'élimination par filtrage (14) des données de position de l'aéronef de l'ensemble de données.

5. Procédé (2) selon l'une quelconque des revendications précédentes, dans lequel la réception de données d'état détectées en externe comporte la réception de données ADS-B.

6. Procédé (2) selon l'une quelconque des revendications précédentes, comportant en outre la réception (32) de données de position à partir de données d'état reçues en externe en dernier par la station au sol pour l'affichage sur un écran.

7. Système d'aéronef (38), comportant un aéronef (40), au moins une station au sol (42), et au moins une unité de fourniture (54) pour fournir des données d'état détectées en externe, le système (38) étant réalisé pour exécuter le procédé selon l'une quelconque des revendications 1 à 6.
